(19) Europäisches Patentamt
European Patent Office
Office européen des brevets

(11) **EP 3 086 116 B1**

(12) **EUROPEAN PATENT SPECIFICATION**

(45) Date of publication and mention
of the grant of the patent:
**28.10.2020 Bulletin 2020/44**

(51) Int Cl.:
**G01N 29/02** *(2006.01)*      **G01N 29/036** *(2006.01)*
**G01N 29/24** *(2006.01)*      **G01N 5/02** *(2006.01)*
**G01N 27/22** *(2006.01)*

(21) Application number: **16173378.7**

(22) Date of filing: **21.11.2011**

(54) **WIRELESS SAW MOISTURE SENSOR**

DRAHTLOSER SAW-FEUCHTIGKEITSSENSOR

CAPTEUR D'HUMIDITÉ SAW SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.10.2016 Bulletin 2016/43**

(62) Document number(s) of the earlier application(s) in
accordance with Art. 76 EPC:
**11190026.2 / 2 594 930**

(73) Proprietor: **Honeywell International Inc.
Morris Plains, NJ 07950 (US)**

(72) Inventors:
• **AVRAMESCU, Viorel
030342 Bucharest (RO)**
• **GEORGESCU, Ion
023732 Bucharest (RO)**
• **BOSTAN, Cazimir Gabriel
061724 Bucharest (RO)**

(74) Representative: **Haseltine Lake Kempner LLP
138 Cheapside
London EC2V 6BJ (GB)**

(56) References cited:
**DE-A1- 10 011 636**

• **BILL DRAFTS: "Acoustic Wave Technology
Sensors", IEEE TRANSACTIONS ON
MICROWAVE THEORY AND TECHNIQUES, IEEE
SERVICE CENTER, PISCATAWAY, NJ, US, vol.
49, no. 4, 1 April 2001 (2001-04-01), pages 795-802,
XP011038300, ISSN: 0018-9480, DOI:
10.1109/22.915466**

## Description

Technical Field

The disclosure relates generally to sensors, and more particular, to moisture sensors.

Background

Moisture detection can be used to detect the level of moisture (e.g. condensed or diffused liquid such as water) in a medium that is subject to moisture ingression, such as soil, wood, paper, insulation and/or any other desired medium. Moisture detection is commonly carried out using a moisture sensor.

Patent document number DE100-11-636-A1 describes a soil moisture meter.

For some locations, it can be difficult to install, monitor, configure and/or operate a moisture sensor, such as when access is limited and/or power is not available. What would be desirable, therefore, is a moisture sensor that is easier to install, monitor, configure and/or operate.

Summary

The present invention in its various aspects is as set out in the appended claims.

In particular, the present invention is defined by a moisture sensor according to claim 1 and a method of measuring a moisture content of a medium according to claim 7.

Brief Description of the Figures

The following description should be read with reference to the drawings. The drawings, which are not necessarily to scale, depict selected illustrative embodiments and are not intended to limit the scope of the disclosure. The disclosure may be more completely understood in consideration of the following detailed description of various illustrative embodiments in connection with the accompanying drawings, in which:

Figure 1 is a schematic diagram of a moisture sensor deployed to measure volumetric moisture content in a porous medium;
Figure 2a is a schematic representation of an illustrative SAW resonator that may be employed in devices of the present disclosure;
Figure 2b illustrates a symbol used to represent a SAW device such as the SAW resonator of Figure 2a;
Figure 3a symbolically illustrates an LCR circuit that may be regarded as an electrical equivalent of a SAW resonator, such as the SAW resonator of Figures 2a and 2b;
Figure 3b symbolically illustrates a moisture-sensitive capacitor electrically coupled in parallel to a to a SAW resonator LCR circuit like that of Figure 3a;
Figure 4 is a schematic diagram showing an illustrative wireless moisture sensor system;
Figure 5 is a schematic diagram showing another illustrative wireless moisture sensor system; and
Figure 6 is a schematic illustration of a packaged wirelessly-interrogable moisture sensor.

Description

The following description should be read with reference to the drawings, in which like elements in different drawings are numbered in like fashion. The drawings, which are not necessarily to scale, depict selected illustrative embodiments and are not intended to limit the scope of the disclosure. Although examples of construction, dimensions, and materials are illustrated for the various elements, those skilled in the art will recognize that many of the examples provided have suitable alternatives that may be utilized.

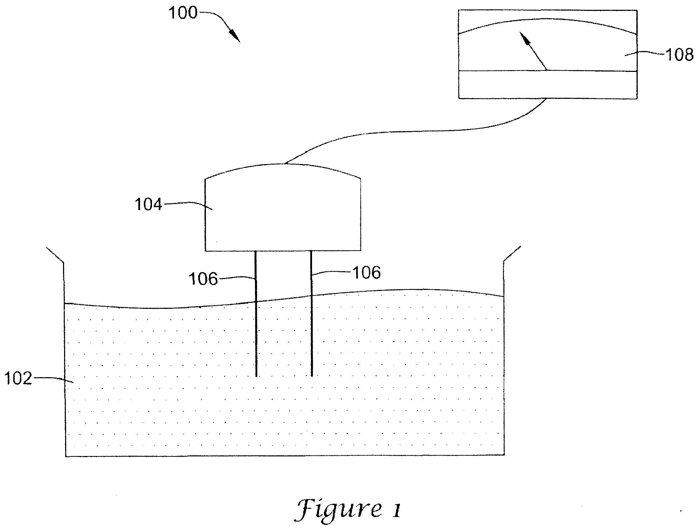

Figure 1 is a schematic diagram of a moisture sensor 100 deployed to measure volumetric moisture content (e.g. condensed or diffused liquid such as water) in a porous medium 102, such as soil, wood, paper, insulation and/or any other desired medium. The illustrative moisture sensor 100 includes a probe 104, which in the illustrative embodiment, includes two opposing prongs 106. When the two opposing prongs 106 are inserted into the medium 102, the two opposing prongs 106 may serve as electrodes of a capacitor, and the medium 102 that surrounds the prongs 106 may act as the dielectric material for the capacitor. If changes occur in the medium 102, due to environmental factors such as a change in moisture content in the medium 102, the value of the capacitance of the capacitor may change accordingly. The moisture sensor 100 may be calibrated such that the moisture content in the medium 102 may be determined from the measured capacitance value of the capacitor, which may be displayed on a meter 108 or the like.

Generally, the capacitance value of a capacitor may depend on geometrical form factors, and on the dielectric permittivity of the material that is crossed by the electric field lines developed between the electrodes of the capacitor. In the example shown, the medium 102 may change its permittivity depending on the moisture content in the medium 102. The change in permittivity and thus capacitance can be significant, particularly since the permittivity of water and/or other condensed or diffused liquids can be substantially different from the permittivity of the medium 102 alone.

In some instances, one or more surface acoustic wave (SAW) devices may be used, for example, to help detect the capacitance of the probe, and in some cases, act as a transponder for wirelessly interrogating the moisture sensor.

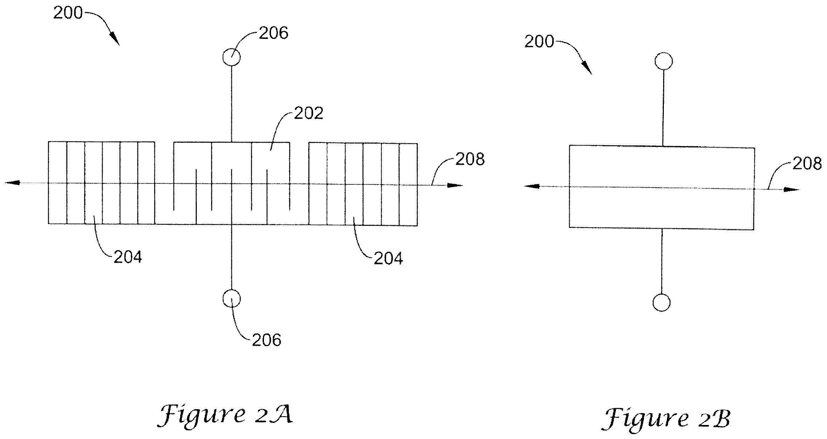

Figure 2a is a schematic representation of an illustrative SAW resonator 200 that may be employed in devices of the present disclosure. SAW resonator 200 may include an inter-digitated transducer 202 and reflectors 204, all disposed on a piezoelectric substrate. Any suitable piezoelectric substrate may be used. Some examples of piezoelectric substrates include substrates with piezoelectric layers; crystals such as (but not limited to) quartz, langasite, lithium niobate, gallium orthophosphate, and so on; and any other suitable suitable piezoelectric materials. Transducer 202 may be both an input transducer and an output transducer. SAW resonator 200 may include electrical connectors 206 that may be connected to one or more antennas and/or other electrical components, depending on the application. Figure 2b illustrates a symbol used to represent a SAW device, such as SAW resonator 200. As noted by the reference arrows 208 in Figures 2a and 2b, SAW resonator 200 may generally be associated with a specific direction of surface wave propagation. Generally, directions or axes of surface acoustic wave propagation may be measured relative to the substrate in which they propagate. Crystalline structure of such a substrate may provide a reference direction against which the propagation of a surface wave is measured.

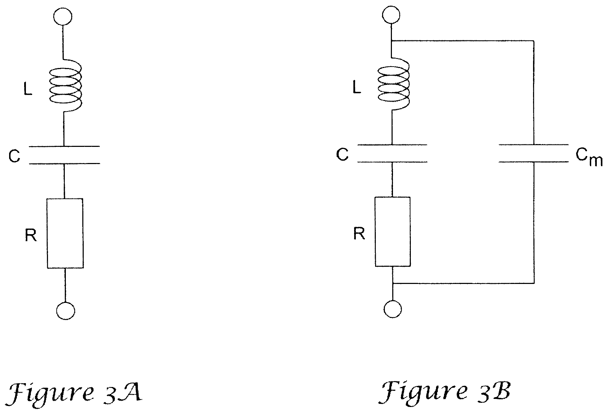

A SAW device such as SAW resonator 200 of Figures 2a and 2b may be regarded as an electrically equivalent "LCR" resonance circuit having a characteristic inductance (L), capacitance (C), and resistance (R), as generally represented symbolically in Figure 3a. The resonance characteristics (e.g., resonance frequency, resonance frequency width, etc.) of such an LCR circuit may be more or less sensitive to the values of these electrical properties. In the present disclosure, a SAW resonator may be coupled to an external (to the SAW device) capacitor, which in turn may affect the resonance characteristics of the combined system of SAW device and external capacitor. By employing an external capacitor, whose capacitance is affected by the presence of moisture, the resonance characteristics of the system may be made sensitive to the presence of moisture. Such a system is symbolically represented in Figure 3b, where a moisture-sensitive capacitor labeled $C_m$ is electrically coupled to a SAW resonator represented by its electrical equivalent LCR circuit. In Figure 3b, the moisture-sensitive capacitor labeled $C_m$ is connected in parallel with the equivalent LCR circuit, but this is not required in all embodiments.

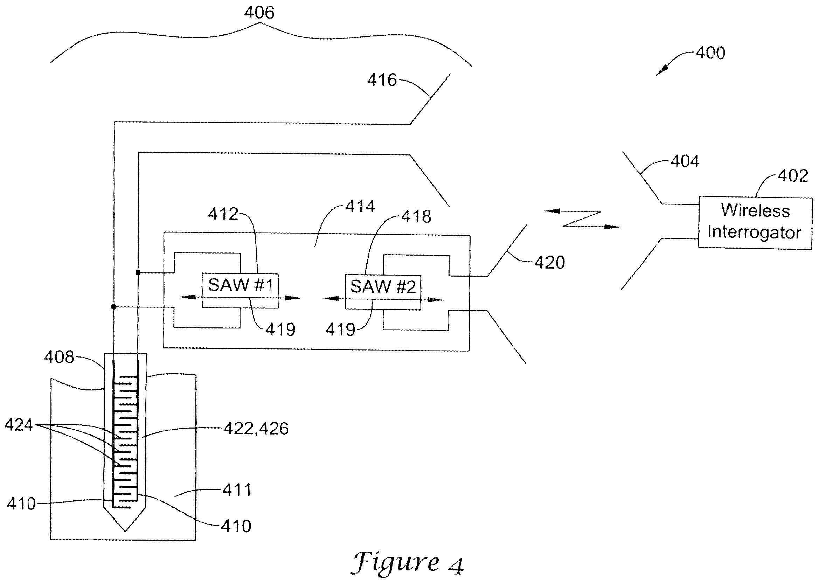

Figure 4 is a schematic diagram showing an illustrative moisture sensor system 400. The illustrative system 400 includes a wirelessly-interrogable moisture sensor generally shown at 406. A wireless interrogator 402 may be configured to interrogate the wirelessly-interrogable moisture sensor 406, and may be located remotely from the moisture sensor. The moisture sensor 406 may include a sensor probe 408 having two spaced conductors 410, with a probe capacitance between the two spaced conductors. The probe capacitance may be dependent upon a moisture content proximate the two spaced conductors 410 in a material under test 411. The material under test may be, for example, soil, wood, paper, insulation and/or any other medium, as desired. The two spaced conductors 410 may be considered to be components of a moisture-test capacitor.

In the example shown in Figure 4, the moisture sensor 406 may include a first SAW resonator 412, disposed on a piezoelectric substrate 414. First SAW resonator 412 may take any suitable form, such as that shown in Figure 3a. The first SAW resonator 412 may be electrically coupled to the two spaced conductors 410 (i.e., the moisture test capacitor) such that a first resonance frequency of the first SAW resonator is dependent upon the capacitance of the moisture-test capacitor of the sensor probe 408, and thus the moisture content proximate the moisture-test capacitor of the sensor probe 408.

The illustrative wirelessly-interrogable moisture sensor 406 may include a first antenna 416, which may be electrically coupled to the first SAW resonator 412. The first SAW resonator 412 may be interrogated wirelessly through first antenna 416 by, for example, wireless interrogator 402. Thus, first SAW resonator 412 may be considered a wirelessly-interrogable SAW device having a resonance frequency that is dependent on the probe capacitance of the sensor probe 408. In some instances, first SAW resonator 412 may be powered solely through a signal received from the wireless interrogator 402 through first antenna 416. However, this is not required. In some instances, the first SAW resonator 412 may be powered by a battery, a fuel cell, a line voltage, or any other suitable power source, as desired. When interrogated, the wirelessly-interrogable first SAW resonator 412 may provide a measure that is related to the first resonance frequency of the first wirelessly-interrogable SAW resonator to the wireless interrogator 402 through antenna 416.

The resonance characteristics the first SAW resonator 412 may be affected by temperature, and thus, deriving useful moisture information from the first SAW resonator 412 may benefit from or depend on appropriate temperature compensation. In one instance, a temperature sensor may be provided, and the sensed temperature may be conveyed to the wireless interrogator 402 to be used for temperature compensation. A temperature sensor may be a device from which a measurement of temperature, or a measure related to temperature, may be obtained. If the temperature dependence of the resonance characteristics of a SAW resonator attached to a moisture-test capacitor is understood, then temperature information from the temperature sensor may be interpreted along with knowledge about the moisture dependence of that SAW resonator to calculate or otherwise determine a measure related to the moisture content proximal to the moisture sensor probe 408.

In some illustrative embodiments, it may be possible to incorporate a temperature sensor into a moisture sensor such that characterization of temperature dependence of a SAW resonator connected to a moisture-test capacitor is not necessary to obtain moisture measurements. According to the invention, such as shown in Figure 4, wirelessly-interrogable moisture sensor 406 includes a second SAW resonator 418. Second SAW resonator 418 may be disposed proximate first SAW resonator 412, such as on the same piezoelectric substrate 414. The SAW resonators 412, 418 may be disposed on the piezoelectric substrate 414 sufficiently near to each other that they experience the same or similar environmental conditions, such as temperature. The SAW resonators 412, 418 may be manufactured with the same orientation with respect to the piezoelectric substrate 414 such that they each operate with surface acoustic waves propagating in the same direction 419, along the same propagation axis or along parallel propagation axes. The SAW resonators 412, 418 may operate with like or different types of acoustic waves, e.g., Rayleigh, pseudo SAW, guided, etc. First and second SAW resonators 412, 418 may have similar or essentially identical dependences on temperature with regard to their resonance frequencies.

As shown in Figure 4, second SAW resonator 418 may be coupled to a second antenna 420, but this is not required in all embodiments. The second SAW resonator 418 may be interrogated wirelessly, for example by wireless interrogator 402 via the second antenna 420, or by another suitable wireless interrogator. In some cases, second SAW resonator 418 may be powered solely through a signal received from the second antenna 420. However, this is not required. In some instances, the second SAW resonator 418 may be powered by a battery, a fuel cell, a line voltage, or any other suitable power source, as desired. In the configuration shown in Figure 4, the second SAW resonator 418 may not be coupled to moisture-test capacitor formed by the two spaced conductors 410 of sensor probe 408. Thus, the second wirelessly-interrogable SAW resonator 418 may oscillate at a second resonance frequency that is not dependent on the probe capacitance of the sensor probe 408, and thus not dependent upon the moisture content in the material under test 411. Note that in the configuration of Figure 4, while first and second SAW resonators 412, 418 may be fabricated or otherwise disposed on the same piezoelectric substrate 414 and may experience essentially the same environmental conditions, they may be decoupled acoustically and/or electronically, if desired.

Temperature independent moisture measurements may be obtained wirelessly in a configuration such as that illustrated in Figure 4, in which the first SAW resonator 412 and second SAW resonator 418 are both disposed on the same piezoelectric substrate 414 in the same orientation, and in which the first SAW resonator but not the second resonator is coupled to the moisture-test capacitor of probe 408. The first SAW resonator 412 and the second SAW resonator 418 may exhibit different resonance frequencies, noted $f_{01}$ and $f_{02}$, respectively. The coupling of the first SAW resonator 412 with the moisture-test capacitor of sensor probe 408 may change the resonance frequency of the first SAW resonator 412 (formed with the first SAW device and the moisture-test capacitor. While interrogating with wireless interrogator 402, the first and second resonance systems may respond respectively with frequencies $f_{01}$ $(M, T)$, depending on moisture content (M) and temperature (T), and $f_{02}$ $(T)$, depending essentially only on temperature. The wireless interrogator 402 (or any other suitable device) may perform a simple subtraction operation over the frequencies, the resulting difference $F(M) = f_{01}$ $(M,T) - f_{02}$ $(T)$ being essentially independent of temperature and essentially affected only by moisture. In some cases, a calibration procedure may be performed to associate values of $F(M)$ with a volumetric moisture content in the material under test 411. The wireless interrogator 402 (or any other suitable device) may be configured to use such a calibration to determine the moisture content of the material under test 411 proximate the moisture-test capacitor of the probe 408, using the computed difference between $f_{01}$ $(M,T)$ and $f_{02}$ $(T)$. Note that this method of determining moisture content does not necessarily require determination of the actual temperature.

It is contemplated that the sensor probe 408, including two spaced conductors 410, may take any suitable form. For example, and in one illustrative embodiment, the two spaced conductors 410 may include two spaced conductive traces on a probe substrate 422 such as a probe circuit board, as illustrated schematically in Figure 4. The two spaced conductive traces may include any suitable number of inter-digitated fingers 424, such as two or more, ten or more, and so on. The inter-digitated fingers 424 may increase the effective area of the moisture-test capacitor, and the more inter-digitated fingers that are used, the larger the capacitance that may be achieved. Also, the thickness of the two spaced traces on the probe substrate 422 may help increase the capacitance between the two spaced conductive traces. As noted above, the probe substrate 422 may include a printed circuit board 426, and the two spaced conductive traces may include traces deposited, printed or otherwise placed on the printed circuit board 426.

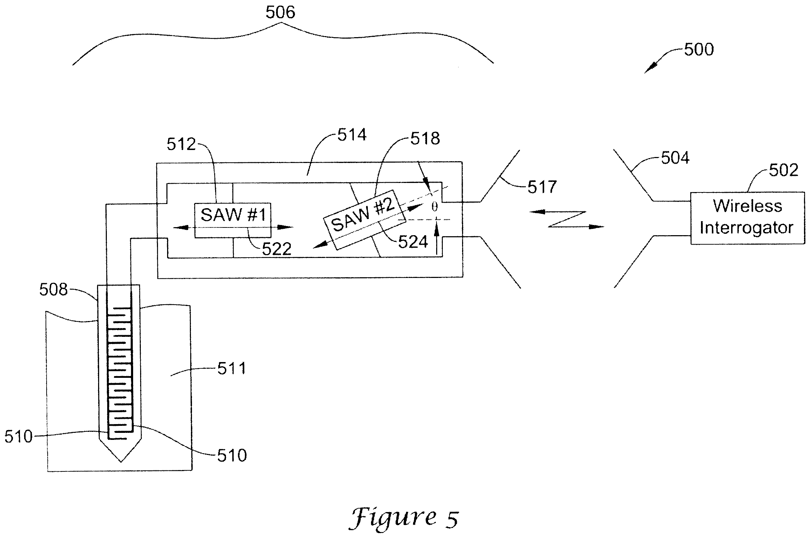

Other wireless moisture sensor system configurations are also contemplated. For example, Figure 5 is a schematic diagram showing another illustrative wireless moisture sensor system 500. System 500 may include a wireless interrogator 502 which may have an antenna 504, and a wirelessly-interrogable moisture sensor 506. The wireless interrogator 502 may be configured to interrogate the wirelessly-interrogable moisture sensor 506, and may be located remotely from the wirelessly-interrogable moisture sensor 506. In the embodiment shown, the moisture sensor 506 may include a sensor probe 508 having two spaced conductors 510, with a probe capacitance between the two spaced conductors. Sensor probe 508 may take any suitable form, as described above. The probe capacitance may be dependent upon the moisture content proximate the two spaced conductors 510 in a material under test 511. The two spaced conductors 510 may be considered to be components of a moisture-test capacitor.

In the example shown, moisture sensor 506 may include a first SAW resonator/device 512 and a second SAW resonator/device 518, both disposed on a piezoelectric substrate 514. SAW resonators 512, 518 may be any suitable SAW resonators, and may take any suitable form. In the moisture sensor system 500 of Figure 5, the first and second SAW resonators 512, 518 may be electrically coupled in parallel with each other, with the spaced conductors 510 of sensor probe 508 (i.e., with the moisture-test capacitor), and with antenna 517, as shown. So configured, the first SAW resonator 512 may resonate at a first resonance frequency that depends on the moisture content proximate the moisture-test capacitor, and the second SAW resonator 518 may resonate at a second resonance frequency that also depends on the moisture content.

Via antenna 517, both first and second SAW resonators 512, 518 (or either individually) may be interrogated wirelessly, for example by wireless interrogator 502. Either or both of the SAW resonators 512, 518 may be powered solely through a signal received from the antenna 517. However, this is not required. In some instances, the first and/or second SAW resonators 512, 518 may be powered by a battery, a fuel cell, a line voltage, or any other suitable power source, as desired.

When interrogated, wirelessly-interrogable first SAW resonator 512 may provide a measure that is related to a first resonance frequency of the first wirelessly-interrogable SAW resonator. Similarly, when interrogated, wirelessly-interrogable second SAW resonator 518 may provide a measure that is related to a second resonance frequency of the second wirelessly-interrogable SAW resonator.

In the configuration of Figure 5, first SAW resonator/device 512 and second SAW resonator/device 518 may be disposed such that their respective propagation axes 522, 524 are not oriented in the same direction, as shown. Rather, their propagation axes 522, 524 may be oriented such that an angle "θ" is subtended between them. First SAW resonator 512 may be oriented along an axis 522 where it generates pure Rayleigh waves (e.g., ST-X for quartz), while second SAW resonator 518 may be oriented along a different axis 524 and may accordingly exhibit a different temperature dependence. The choice of orienting the first SAW resonator 512 along a pure Rayleigh wave axis is arbitrary and could be swapped with such an orientation for the second SAW resonator 518 or another orientation, as desired. When so provided, the first and second resonance frequencies of the first and second SAW resonators 512, 518 may exhibit different temperature dependences, and the difference between the two resonance frequencies may not be a constant (as it may be in the configuration of Figure 4), but may provide a measure of temperature. The temperature dependence of the difference between the first and second SAW frequencies may be expressed mathematically by a polynomial (or other) function of temperature. This may be written, for example, as $f_{02}(T) - f_{01}(T) = p(T)$. In some temperature ranges, the $p(T)$ function may be bijective, and the $p$ function may have an inverse function $p^{-1}$ that allows the determination of the temperature $T$ from the difference $f_{02}(T) - f_{01}(T)$. That is, and in some cases, the temperature may be determined via the mathematical relationship $p^{-1} p(T) = T$.

In the configuration shown in Figure 5, while both SAW resonators 512, 518 may exhibit different temperature dependences, they may exhibit similar dependences on the moisture value proximal the moisture-test capacitor of probe 508. By taking a difference between the two resonance frequencies, an essentially moisture-independent, and temperature-dependent quantity F may be obtained. With $f_{01}' = f_{01}'(M,T)$ and $f_{02}' = f_{02}'(M,T)$ being the resonance frequencies of the first and second SAW resonators 512, 518, respectively, each being dependent both on moisture and temperature, their difference may be expressed as $f_{02}' - f_{01}' = f_{02}'(M,T) - f_{01}'(M,T) = F(T)$. As discussed herein, $F(T)$ may be approximated by a polynomial $p(T)$ that is a bijective function for the temperature range of interest.

A method for determining a moisture content proximate the two spaced conductors 510 of a sensor probe 508 of the moisture sensor system 500 of Figure 5 may be as follows:

The wireless interrogator 502 may wirelessly interrogate the wirelessly-interrogable moisture sensor 506 via antennas 504 and 517. Wirelessly interrogating the wirelessly-interrogable moisture sensor 506 may include wirelessly interrogating both of first and second SAW resonators 512, 518 to detect their respective resonance frequencies $f_{01}'(M,T)$ and $f_{02}'(M,T)$. In some cases, the wireless interrogator 502 may provide a signal that delivers all the necessary power to operate the first and second SAW resonators 512, 518, however this is not required.

The wireless interrogator 502 (or any other suitable device) may calculate the difference $f_{02}'(M,T) - f_{01}'(M,T) = F(T)$ and determine the temperature from the quantity $F(T)$ in any appropriate way, such as via look-up table or by computation.

The frequency $f_{01}$ corresponding to the first SAW resonator 512 that uses pure Rayleigh waves may have a well known temperature dependence. This may also be true for the frequency $f_{01}'$ of same resonator when it is coupled to the moisture-test capacitor. The wireless interrogator 502 (or any other suitable device) may determine the value of the frequency for this resonator at the determined temperature $T$ in the case where no moisture is present. This determination of frequency may be performed via calculation, for example, using knowledge of a polynomial or other function that fits $f'_{01}(T)$ (the resonance frequency when no moisture is present), whose coefficients may have been determined previously.

The wireless interrogator 502 (or any other suitable device) may performs the difference between the detected frequency $f'_{01}(M,T)$ and the computed frequency $f'_{01}(T)$, that is, $f'_{01}(M,T) - f'_{01}(T) = F_M(M)$. The wireless interrogator 502 (or any other suitable device) may then determine the moisture content M from $F_M(M)$ in any suitable way, for example, with a look-up table or by computation.

In systems 400 and 500 of Figures 4 and 5, respectively, a moisture-test capacitor may be coupled to a SAW resonator with the effect of modifying the equivalent capacitance of the SAW resonator and moisture-test capacitor circuit. This modification of the equivalent capacitance may result in a shift in the resonance frequency, providing the basis for a quantitative moisture measurement. The modification of the equivalent capacitance may also affect the impedance match between the SAW resonator circuit and an antenna via which the SAW resonator circuit is wirelessly interrogated, potentially affecting wireless communication performance. Capacitor and other system parameters may be chosen judiciously to balance potentially competing effects of greater or lesser moisture sensitivity vs. degraded or improved wireless performance.

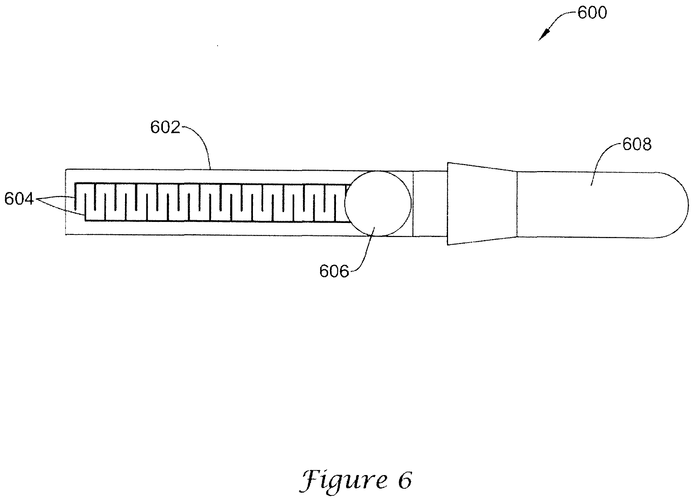

Figure 6 is a schematic illustration of a packaged wirelessly-interrogable moisture sensor 600 like or similar to wirelessly-interrogable moisture sensors 406 and 506 of Figures 4 and 5. Sensor probe 602 may include two spaced conductors 604, with a probe capacitance therebetween, forming a moisture-test capacitor. Package 606 may contain one, two, or more SAW resonator devices, some or all of which may be coupled to the two spaced conductors 604. Antenna housing 608 may contain one, two, or more antenna coupled in any suitable configuration to the SAW resonator devices housed by package 606. As can be seen, wirelessly-interrogable moisture sensor 600 may be a compact, robust, and easily deployable sensor.

**Claims**

1. A moisture sensor (100) comprising:

   a sensor probe (104) having two spaced conductors (106) on a probe substrate, with a probe capacitance therebetween, wherein the probe capacitance is dependent upon a moisture content proximate the two spaced conductors;
   a first wirelessly-interrogable SAW device (412) having a resonance frequency that is dependent on the probe capacitance of the sensor probe;
   a second wirelessly-interrogable SAW device (418) having a resonance frequency that is dependent on the probe capacitance of the sensor probe, wherein the first wirelessly-interrogable SAW device has a first propagation axis along a piezoelectric substrate, and the second wirelessly-interrogable SAW device has a second propagation axis along the piezoelectric substrate that is not parallel to the first propagation axis; and
   at least one antenna (416) electrically coupled to the first wirelessly-interrogable SAW device and the second wirelessly-interrogable SAW device.

2. The moisture sensor of claim 1, wherein the first wirelessly-interrogable SAW device has a first temperature dependence, wherein the second wirelessly-interrogable SAW device has a second temperature dependence, and wherein the second temperature dependence is different from the first temperature dependence.

3. The moisture sensor of claim 1, wherein the first wirelessly-interrogable SAW device has a first temperature dependence, wherein the second wirelessly-interrogable SAW device has a second temperature dependence, and wherein the second temperature dependence is the same as the first temperature dependence.

4. The moisture sensor of claim 1, wherein the first and second wirelessly-interrogable SAW devices are wirelessly-interrogable from a remote location via the at least one antenna, and when interrogated, the first wirelessly-interrogable SAW device provides a measure that is related to the resonance frequency of the first wirelessly-interrogable SAW device, and the second wirelessly-interrogable SAW device provides a measure that is related to the resonance frequency of the second wirelessly-interrogable SAW device.

5. The moisture sensor of claim 1, further comprising a temperature sensor configured to measure a temperature of the first wirelessly-interrogable SAW device.

6. The moisture sensor of claim 1, wherein the first wirelessly-interrogable SAW device and the second wirelessly-interrogable SAW device are electrically coupled in parallel with the sensor probe and the at least one antenna.

**7.** A method of measuring a moisture content of a medium, comprising:
interrogating a first SAW resonator (412) of a moisture sensor (100) through a first antenna (416) with a remote wireless interrogator, wherein the moisture sensor comprising:

a sensor probe (104) having two spaced conductors (106), with a probe capacitance therebetween, wherein the sensor probe is structured such that the probe capacitance is dependent upon a moisture content proximate the two spaced conductors,
the first SAW resonator comprising an inter-digitated transducer (202) electrically coupled to the first antenna and to the sensor probe,
a second SAW resonator comprising an interdigitated transducer, wherein the second SAW resonator is configured to resonate at a second resonance frequency, and
at least one reflector (204), wherein the first SAW resonator is configured to resonate at a resonance frequency that is dependent on the probe capacitance of the sensor probe;
receiving a response from the first SAW resonator, wherein the response comprises the resonance frequency of the first SAW resonator; and
determining a moisture content proximate the two spaced conductors of the sensor probe using the resonance frequency received from the first SAW resonator.

**8.** The method of claim 7, further comprising:

interrogating the second SAW resonator through the first antenna with the remote wireless interrogator; and
receiving a response from the second SAW resonator, wherein the response comprises the second resonance frequency of the second SAW resonator.

**9.** The method of claim 8, wherein the first SAW resonator has a first propagation axis along a piezoelectric substrate, and wherein the second SAW resonator has a second propagation axis along the piezoelectric substrate that is not parallel to the first propagation axis.

**10.** The method of claim 7, further comprising: measuring an indication of a temperature of the first SAW resonator, wherein the response comprises the indication of the temperature.

**Patentansprüche**

**1.** Feuchtigkeitssensor (100), umfassend:

eine Sensorsonde (104), die zwei beabstandete Leiter (106) auf einem Sondensubstrat mit einer Sondenkapazität dazwischen aufweist, wobei die Sondenkapazität von einem Feuchtigkeitsgehalt in der Nähe der beiden beabstandeten Leiter abhängt;
eine erste drahtlos abfragbare SAW-Vorrichtung (412), die eine Resonanzfrequenz aufweist, die von der Sondenkapazität der Sensorsonde abhängt;
eine zweite drahtlos abfragbare SAW-Vorrichtung (418), die eine Resonanzfrequenz aufweist, die von der Sondenkapazität der Sensorsonde abhängt, wobei die erste drahtlos abfragbare SAW-Vorrichtung eine erste Ausbreitungsachse entlang eines piezoelektrischen Substrats aufweist und die zweite drahtlos abfragbare SAW-Vorrichtung eine zweite Ausbreitungsachse entlang des piezoelektrischen Substrats aufweist, die nicht parallel zur ersten Ausbreitungsachse ist; und
mindestens eine Antenne (416), die elektrisch mit der ersten drahtlos abfragbaren SAW-Vorrichtung und der zweiten drahtlos abfragbaren SAW-Vorrichtung gekoppelt ist.

**2.** Feuchtigkeitssensor nach Anspruch 1, wobei die erste drahtlos abfragbare SAW-Vorrichtung eine erste Temperaturabhängigkeit aufweist, wobei die zweite drahtlos abfragbare SAW-Vorrichtung eine zweite Temperaturabhängigkeit aufweist und wobei sich die zweite Temperaturabhängigkeit von der ersten Temperaturabhängigkeit unterscheidet.

**3.** Feuchtigkeitssensor nach Anspruch 1, wobei die erste drahtlos abfragbare SAW-Vorrichtung eine erste Temperaturabhängigkeit aufweist, wobei die zweite drahtlos abfragbare SAW-Vorrichtung eine zweite Temperaturabhängigkeit aufweist und wobei die zweite Temperaturabhängigkeit dieselbe ist wie die erste Temperaturabhängigkeit.

**4.** Feuchtigkeitssensor nach Anspruch 1, wobei die erste und die zweite drahtlos abfragbare SAW-Vorrichtung von einem entfernten Ort über die mindestens eine Antenne drahtlos abfragbar sind und die erste drahtlos abfragbare SAW-Vorrichtung bei Abfrage eine Maßnahme bereitstellt, die mit der Resonanzfrequenz der ersten drahtlos abfragbaren SAW-Vorrichtung zusammenhängt, und die zweite drahtlos abfragbare SAW-Vorrichtung bei Abfrage eine Maßnahme bereitstellt, die mit der Resonanzfrequenz der zweiten drahtlos abfragbaren SAW-Vorrichtung zusammenhängt.

**5.** Feuchtigkeitssensor nach Anspruch 1, ferner umfassend einen Temperatursensor, der konfiguriert ist, um eine Temperatur der ersten drahtlos abfragbaren SAW-Vorrichtung zu messen.

**6.** Feuchtigkeitssensor nach Anspruch 1, wobei die erste drahtlos abfragbare SAW-Vorrichtung und die zweite drahtlos abfragbare SAW-Vorrichtung mit der Sensorsonde und der mindestens einen Antenne elektrisch parallel gekoppelt sind.

**7.** Verfahren zum Messen eines Feuchtigkeitsgehalts eines Mediums, umfassend:
Abfragen eines ersten SAW-Resonators (412) eines Feuchtigkeitssensors (100) über eine erste Antenne (416) mit einem entfernten drahtlosen Abfragegerät, wobei der Feuchtigkeitssensor Folgendes umfasst:

eine Sensorsonde (104), die zwei beabstandete Leiter (106) mit einer Sondenkapazität dazwischen aufweist, wobei die Sensorsonde so konstruiert ist, dass die Sondenkapazität von einem Feuchtigkeitsgehalt in der Nähe der beiden beabstandeten Leiter abhängt,
den ersten SAW-Resonator, der einen fingerartig ineinandergreifenden Wandler (202) umfasst, der elektrisch mit der ersten Antenne und der Sensorsonde gekoppelt ist,
einen zweiten SAW-Resonator, der einen fingerartig ineinandergreifenden Wandler umfasst, wobei der zweite SAW-Resonator konfiguriert ist, um bei einer zweiten Resonanzfrequenz zu schwingen, und
mindestens einen Reflektor (204), wobei der erste SAW-Resonator konfiguriert ist, um bei einer Resonanzfrequenz zu schwingen, die von der Sondenkapazität der Sensorsonde abhängt;
Empfangen einer Antwort von dem ersten SAW-Resonator, wobei die Antwort die Resonanzfrequenz des ersten SAW-Resonators umfasst; und
Bestimmen eines Feuchtigkeitsgehalts in der Nähe der beiden beabstandeten Leiter der Sensorsonde unter Verwendung der vom ersten SAW-Resonator empfangenen Resonanzfrequenz.

**8.** Verfahren nach Anspruch 7, ferner umfassend:

Abfragen des zweiten SAW-Resonators über die erste Antenne mit dem entfernten drahtlosen Abfragegerät; und
Empfangen einer Antwort von dem zweiten SAW-Resonator, wobei die Antwort die zweite Resonanzfrequenz des zweiten SAW-Resonators umfasst.

**9.** Verfahren nach Anspruch 8, wobei der erste SAW-Resonator eine erste Ausbreitungsachse entlang eines piezoelektrischen Substrats aufweist und wobei der zweite SAW-Resonator eine zweite Ausbreitungsachse entlang des piezoelektrischen Substrats aufweist, die nicht parallel zur ersten Ausbreitungsachse ist.

**10.** Verfahren nach Anspruch 7, ferner umfassend: Messen einer Angabe einer Temperatur des ersten SAW-Resonators, wobei die Antwort die Angabe der Temperatur umfasst.

## Revendications

**1.** Capteur d'humidité (100) comprenant :

une sonde de détection (104) ayant deux conducteurs espacés (106) sur un substrat de sonde, entre lesquels se trouve une capacité de sonde, la capacité de sonde dépendant d'une teneur en humidité à proximité des deux conducteurs espacés ;
un premier dispositif à SAW interrogeable sans fil (412) dont la fréquence de résonance dépend de la capacité de sonde de la sonde de détection ;
un second dispositif à SAW interrogeable sans fil (418) dont la fréquence de résonance dépend de la capacité de sonde de la sonde de capteur, le premier dispositif à SAW interrogeable sans fil présentant un premier axe de propagation le long d'un substrat piézoélectrique et le second dispositif à SAW interrogeable sans fil présentant un second axe de propagation le long du substrat piézoélectrique, qui n'est pas parallèle au premier axe de propagation ; et
au moins une antenne (416), couplée électriquement au premier dispositif à SAW interrogeable sans fil et au second dispositif à SAW interrogeable sans fil.

**2.** Capteur d'humidité selon la revendication 1, dans lequel le premier dispositif à SAW interrogeable sans fil présente une première dépendance à la température, le second dispositif à SAW interrogeable sans fil présentant une seconde dépendance à la température et la seconde dépendance à la température étant différente de la première dépendance à la température.

**3.** Capteur d'humidité selon la revendication 1, dans lequel le premier dispositif à SAW interrogeable sans fil présente une première dépendance à la température, le second dispositif à SAW interrogeable sans fil présentant une seconde dépendance à la température et la seconde dépendance à la température étant identique à la première dépendance à la température.

4. Capteur d'humidité selon la revendication 1, dans lequel les premier et second dispositifs à SAW interrogeables sans fil sont interrogeables sans fil à partir d'un emplacement distant par l'intermédiaire d'au moins une antenne et lorsqu'il est interrogé, le premier dispositif à SAW interrogeable sans fil fournit une mesure qui est liée à la fréquence de résonance du premier dispositif à SAW interrogeable sans fil, tandis que le second dispositif à SAW interrogeable sans fil fournit une mesure qui est liée à la fréquence de résonance du second dispositif à SAW interrogeable sans fil.

5. Capteur d'humidité selon la revendication 1, comprenant en outre un capteur de température conçu pour mesurer une température du premier dispositif à SAW interrogeable sans fil.

6. Capteur d'humidité selon la revendication 1, dans lequel le premier dispositif à SAW interrogeable sans fil et le second dispositif à SAW interrogeable sans fil sont couplés électriquement en parallèle avec la sonde de capteur et avec l'au moins une antenne.

7. Procédé de mesure de la teneur en humidité d'un milieu, comprenant :
l'interrogation d'un premier résonateur à SAW (412) d'un capteur d'humidité (100) par l'intermédiaire d'une première antenne (416) à l'aide d'un interrogateur sans fil à distance, le capteur d'humidité comprenant :

   une sonde de détection (104) comportant deux conducteurs espacés (106), entre lesquels se trouve une capacité de sonde, la sonde de détection étant structurée de telle sorte que la capacité de sonde dépende d'une teneur en humidité à proximité des deux conducteurs espacés,
   le premier résonateur à SAW comprenant un transducteur inter-numérisé (202) couplé électriquement à la première antenne et à la sonde de détection,
   un second résonateur à SAW comprenant un transducteur inter-numérisé, le second résonateur à SAW étant conçu pour résonner à une seconde fréquence de résonance et
   au moins un réflecteur (204), le premier résonateur à SAW étant conçu pour résonner à une fréquence de résonance qui dépend de la capacité de sonde de la sonde de capteur ;
   la réception d'une réponse du premier résonateur à SAW, la réponse comprenant la fréquence de résonance du premier résonateur à SAW ; et

   la détermination d'une teneur en humidité à proximité des deux conducteurs espacés de la sonde de détection à l'aide de la fréquence de résonance reçue du premier résonateur à SAW.

8. Procédé selon la revendication 7, comprenant en outre :

   l'interrogation du second résonateur à SAW par l'intermédiaire de la première antenne à l'aide de l'interrogateur sans fil distant ; et
   la réception d'une réponse du second résonateur à SAW, la réponse comprenant la seconde fréquence de résonance du second résonateur à SAW.

9. Procédé selon la revendication 8, dans lequel le premier résonateur à SAW présente un premier axe de propagation le long d'un substrat piézoélectrique et dans lequel le second résonateur à SAW présente un second axe de propagation le long du substrat piézoélectrique, qui n'est pas parallèle au premier axe de propagation.

10. Procédé selon la revendication 7, comprenant en outre : la mesure d'une indication d'une température du premier résonateur à SAW, la réponse comprenant l'indication de la température.

EP 3 086 116 B1

*Figure 1*

Figure 2B

Figure 2A

Figure 3B

Figure 3A

*Figure 4*

EP 3 086 116 B1

*Figure 5*

EP 3 086 116 B1

*Figure 6*

**EP 3 086 116 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10011636 A1